# EUROPÄISCHE PATENTANMELDUNG

(11) **EP 2 130 644 A2**
(43) Veröffentlichungstag der Anmeldung: **09.12.2009**
(21) Anmeldenummer: 09004817.4
(22) Anmeldetag: 01.04.2009
(51) Int. Cl.: B23Q 3/18

(54) **Vorrichtung zum Bearbeiten eines Werkstückes**

(30) Priorität: 03.04.2008 DE 102008017482
(71) Anmelder: Santo, Wilfried, 79541 Lörrach-Hauingen (DE)
(72) Erfinder: Santo, Wilfried, 79541 Lörrach-Hauingen (DE)
(74) Vertreter: Weiss, Peter

(57) **Zusammenfassung**

Bei einer Vorrichtung zum Bearbeiten eines Werkstücks (3) mit einem Werkzeug (2), welches in einem Halter (1) aufgenommen und gegen das Werkstück (3) bewegbar ist, soll der Halter (1) mit dem Werkzeug (2) in jedem Winkel gegenüber dem Werkstück (3) einstellbar sein.

## Beschreibung

Die Erfindung betrifft eine Vorrichtung zum Bearbeiten eines Werkstücks mit einem Werkzeug, welches in einem Halter aufgenommen und gegen das Werkstück bewegbar ist, sowie einen entsprechenden Halter.

### Stand der Technik

Zur Bearbeitung von Werkstücken mittels eines Werkzeugs sind eine Vielzahl von Maschinen bekannt und auf dem Markt. Nur bspw. wird auf die bekannte Drehbank verwiesen, auf der eine Bearbeitung eines Werkstücks während einer Drehbewegung des Werkstücks und/oder einer Drehbewegung des Werkzeugs stattfindet. Die vorliegende Erfindung ist aber auf diese Maschinentyp nicht beschränkt, sondern umfasst jede Maschine zum Bearbeiten eines Werkstücks, sei es durch Schneiden, Drehen, Fräsen, Schleifen, Bohren, Hohnen, Polieren usw., um nur einige Bearbeitungsvorgänge zu nennen.

Bei bekannten Werkzeugmaschinen stellt die Ausrichtung des Werkzeugs zu dem zu bearbeitenden Werkstück ein Problem dar, da diese Ausrichtung in der Regel nur in einem beschränkten Umfang möglich ist.

### Aufgabe

Aufgabe der vorliegenden Erfindung ist es, eine Vorrichtung der vorgenannten Art zu entwickeln, mittels welcher eine fast allseitige Bearbeitbarkeit des Werkstücks in beliebigen Stellungen des Werkzeugs möglich ist.

### Lösung der Aufgabe

Zur Lösung der Aufgabe führt, dass der Halter mit dem Werkzeug in jedem Winkel gegenüber dem Werkstück einstellbar ist.

Bevorzugt wird eine Werkzeugmaschine verwendet, in der ein sogenannter Multifix vorhanden ist. Ein derartiger Multifix ist bspw. in der DE 43 22 082 A1 beschrieben. Ausserdem ist er bspw. im Internet unter www.top-maschinen.de/spannwerkzeuge/multifix-stahlhalter/produktinfomultifix/index.htm zu finden. Er besteht aus einem Zentralkörper mit einer profilgeschliffenen Verzahnung. Dieser Zentralkörper wird von einer Manschette bzw. Spannschalenpaar umfasst, wobei die Manschette mit einem Wechselhalter verbunden ist. Dieser Wechselhalter wird durch einen Exzenterbolzen gegen eine wellenförmige Verzahnung des Zentralkörpers gespannt.

Gemäss der vorliegenden Erfindung ist der Halter lösbar mit dem Multifix verbunden. Hierzu dient eine Klemmeinrichtung, bspw. der eben erwähnte und bekannte Wechselhalter. Hierzu weist die Klemmeinrichtung einen Spalt zur Aufnahme einer Klemmleiste auf, wobei diese Klemmleiste dem Halter zugeordnet ist. Durch diese leichte Lösbarkeit kann der Halter auf Wunsch oder bei verschlissenem Werkzeug auf einfache Art und Weise von der Klemmeinrichtung gelöst und ausgetauscht werden.

Bevorzugt besteht der Halter aus zwei Teilen, nämlich einem Tragrahmen und einem Schlitten. Die Klemmleiste wird dabei an dem Tragrahmen vorgesehen, während der Schlitten gegenüber dem Tragrahmen bewegbar ist. Hierzu sind entsprechende Halterungen für den Schlitten an dem Tragrahmen vorgesehen, wobei bevorzugt der Schlitten lösbar mit den Halterungen verbunden ist.

Die Halterungen wiederum sind bspw. an einer Spindel angeordnet, die drehbar an dem Tragrahmen gelagert ist. Durch einen entsprechenden Antrieb kann die Spindel bewegt und damit auch der Schlitten an den Halterungen gegenüber dem Tragrahmen versetzt werden.

Der Schlitten ist so ausgestaltet, dass er ein Werkzeug halten kann. Dabei ist auch daran gedacht, den Schlitten bspw. als Rahmengestell auszuführen, wobei in das Rahmengestell eine bekannte und auch selbstständig verwendbare Bohrmaschine eingesetzt und dieser das entsprechende Werkzeug zugeordnet wird.

Somit wird eine Vorrichtung aufgezeigt, bei der das Werkzeug über den Multifix nicht nur in X-, Y- und Z-Richtung verfahrbar ist, sondern bei der auch zusätzlich noch der Schlitten gegenüber dem Tragrahmen oder bspw. auch der gesamte Halter gegenüber der Klemmeinrichtung bewegbar ist. Es gibt jetzt keine Winkel mehr, in dem nicht das Werkzeug gegen das Werkstück gestellt werden kann.

Es handelt sich hierbei um eine Antriebseinheit mit oder ohne eigenen Antrieb auf einer oder mehreren Achsen, die mit oder ohne eigenen Antrieb in jedem Winkel und in jeder Höhe verstellbar sind. Diese kann in jeden handelsüblichen Werkzeughalter oder Werkzeugaufnahme, wie z.B. Multi-Fix, Revolverkopf oder Vielfachhalter, eingespannt werden. Die Einheit zeichnet sich dadurch aus, dass das Werkstück mit einer Einheit von allen Seiten gegebenenfalls, nur durch Umspannen, bearbeitet werden kann.

Ebenfalls vorstellbar ist das Anbringen der erfindungsgemässen Einheit auf und/oder an einem Drehtisch, der gegebenenfalls in dem Werkzeughalter, z.B. Multifix-Halter, eingespannt werden kann.

Die Achsen können bei Bedarf auch an der Maschine, z.B. Drehmaschine, Planschlitten, Bettschlitten starr befestigt werden.

Erfindungsgemäss kann es sich bei der vorliegenden Erfindung auch um eine vollständig selbständige Einheit handeln, die beispielsweise einem Kreuzschlitzschlitten einer Werkzeugmaschine aufgesetzt wird. In diesem Fall befindet sich dann der Multifix auf der Vorrichtung selbst. In der Vorrichtung sind sämtliche Möglichkeiten vorgesehen, ggf. zusätzlich zu den Möglichkeiten des Kreuzschlittens, die es erlauben, ein Werkzeug in jedem beliebigen Winkel gegenüber einem zu bearbeitenden Werkstück anzustellen.

In einem bevorzugten Ausführungsbeispiel der Erfindung soll die Vorrichtung sogar die Möglichkeit aufweisen, zwei gleiche oder verschiedene Werkzeuge gegen ein zu bearbeitendes Werkstück bewegen zu können. Beispielsweise kann eine Einrichtung zum Bohren von Löchern mit einer Einrichtung zum Fräsen gekoppelt sein. Dies ist aber keineswegs einschränkend, gedacht wird an alle möglichen Werkzeug, mit denen ein Werkstück bearbeitet werden kann.

In einem Beispiel ist in diesem Fall mit einem Tragkörper der Multifix verbunden, an dem sich eine oben beschriebene Halterung für eine Bohreinrichtung befindet. Gleichfalls soll an dem Tragkörper eine Einrichtung angeordnet sein, mit der ein Fräswerkzeug betrieben werden kann. Dieser Tragkörper ist bevorzugt drehbar gelagert und kann auch in der Höhe verstellt werden. Das gleiche gilt auch für die Bohreinrichtung und die Fräseinrichtung selbst. Hier sind ebenfalls viele Möglichkeiten denkbar und sollen von der vorliegenden Erfindung umfasst sein.

In der vorliegenden Erfindung wird aber auch Schutz für den Halter selbst begehrt. Dabei weist der Halter die oben erwähnte Ausgestaltung aus Schlitten und Tragrahmen auf, wobei der Schlitten gegenüber dem Tragrahmen bewegbar sein soll.

Unabhängig davon wird Schutz für eine erfindungsgemässe Vorrichtung beansprucht bei der das Spannfutter in dem das Werkstück gehalten ist, motorisch bewegbar ist. Dazu ist dem Spannfutter ein Zahnkranz zugeordnet, der mit einem Zahnrad eines Motors zusammenwirkt. Das hat den Vorteil dass das Spannfutter in jede beliebige Stellung positioniert werden kann. Um die Kraftübertragung zu unterbrechen, kann das Zahnrad vom Zahnkranz wegbewegt werden.

Denkbar und bevorzugt ist aber auch, dass mittels eines entsprechenden Antriebs die Welle gedreht werden kann, an der das Spannfutter selbst angeordnet ist. Beispielsweise kann ein Zahnkranz dieser Welle4 aufsitzen und von einem oben beschriebenen Antrieb bewegt werden. Damit kann auch das Werkstück in eine geeignete Position gebracht werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht, teilweise aufgebrochen dargestellt, eines erfindungsgemässen Halters für ein Werkzeug zum Bearbeiten eines Werkstücks;
Figur 2 eine Draufsicht auf einen Teil des Halters gemäss Figur 1;
Figur 3 eine teilweise dargestellten Seitenansicht einer erfindungsgemässen Vorrichtung zum Bearbeiten eines Werkstücks mit einem Werkzeug;
Figur 4 eine Draufsicht auf einen Multifix mit einer angesetzten Klemmeinrichtung;
Figur 5 eine vergrösserte Seitenansicht eines Ausschnitts aus der Vorrichtung gemäss Fig. 3 im Bereich eines Spannfutters;
Figur 6 eine Seitenansicht eines weiteren Ausführungsbeispiels eines Halters an einem Drehelement;
Figur 7 eine Frontansicht des Halters gemäss Figur 1 an einer Einrichtung zur Höhenverstellung;
Figur 8 eine Draufsicht auf ein weiteres Ausführungsbeispiel einer Vorrichtung zum Bearbeiten eines Werkstücks entsprechend Figur 3;
Figur 9 eine Draufsicht auf das Ausführungsbeispiel gemäss Figur 8 in einer anderen Gebrauchslage;
Figur 10 eine Draufsicht auf den Halter nach Figur 6 in unterschiedlichen Gebrauchslagen;
Figur 11 eine schematische Seitenansicht eines weiteren Ausführungsbeispiels eines Teils einer erfindungsgemässen Vorrichtung zum Bearbeiten eines Werkstücks mit einem Werkzeug.

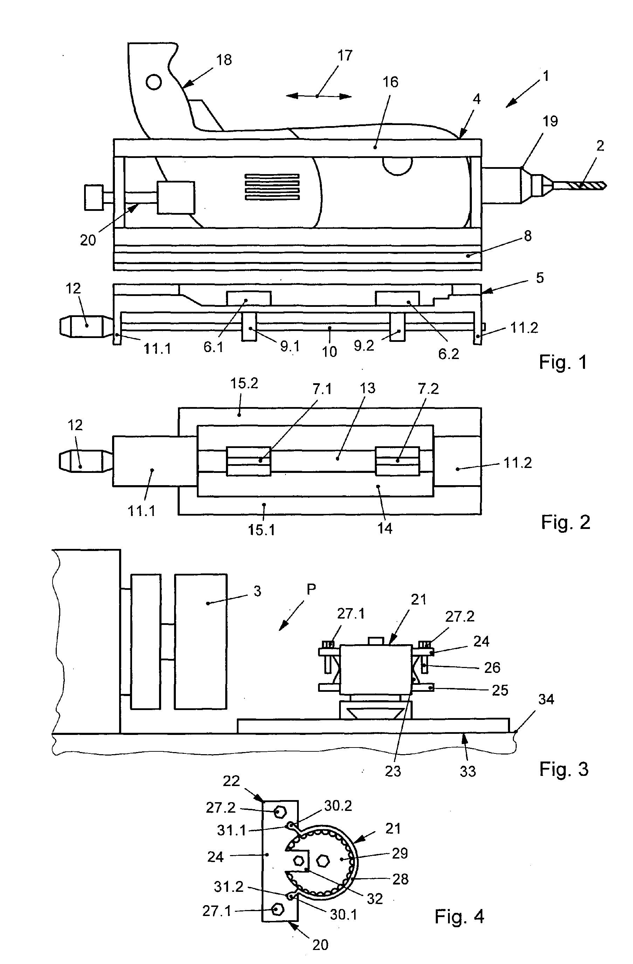

Ein erfindungsgemässer Halter 1 für ein Werkzeug 2 zum Bearbeiten eines in Figur 3 dargestellten Werkstücks 3 besteht gemäss Figur 1 aus zwei Teilen, nämlich einem Schlitten 4 und einem Tragrahmen 5. In dem Tragrahmen 5 sind zwei Halterungen 6.1 und 6.2 vorgesehen, welche jeweils, wie in Figur 2 erkennbar, einen Schlitz 7.1 und 7.2 aufweisen. In diesen Schlitz 7.1 bzw. 7.2 kann eine Schiene 8 an dem Schlitten 4 eingesetzt und durch entsprechende Befestigungselemente mit den Halterungen 6.1 und 6.2 verbunden werden.

Die Halterungen 6.1 und 6.2 sitzen mit entsprechenden Spindelhülsen 9.1 und 9.2 einer Spindel 10 auf, wobei diese Spindel 10 in entsprechenden Rahmenabschnitten 11.1 und 11.2 des Tragrahmens 5 drehbar gelagert ist. Die Drehung der Spindel 10 wird über einen entsprechenden Antrieb, bspw. einen Elektromotor 12, bewirkt.

Die Spindelhülsen 9.1 und 9.2 sind im übrigen vorzugsweise einstückig mit den Halterungen 6.1 und 6.2 verbunden und durchgreifen einen Schlitz 13 in einem Boden 14 des Tragrahmens 5. Die Rahmenabschnitte 11.1 und 11.2 bilden zusammen mit dem Boden 14 ein Grundgerüst für den Tragrahmen 5, wobei die Rahmenabschnitte 11.1 und 11.2 seitlich über Klemmleisten 15.1 und 15.2 miteinander verbunden werden.

Der Schlitten 4 besteht im wesentlichen aus einem Rahmengestell 16, welches von der Schiene 8 untergriffen wird. Über die Verbindung der Schiene 8 mit den Halterungen 6.1 und 6.2 kann bei Betätigung des Antriebs 12 und der Spindel 10 dieser Schlitten 4 in Richtung des Doppelpfeils 17 bewegt werden.

In dem Rahmengestell 16 befindet sich eine Bohrmaschine 18, deren Bohrkopf 19 das Werkzeug 2 aufnimmt. Die Bohrmaschine 18 ist über eine Klemmeinrichtung 20 in dem Rahmengestell 16 gehalten.

Zur Verbindung des Halters 1 mit einem Multifix 21 in einer Vorrichtung P zum Bearbeiten des Werkstücks 3 mittels dem Werkzeug 2 ist gemäss den Figuren 3 und 4 dem Multifix 21 eine Klemmeinrichtung 22 zugeordnet. Diese Klemmeinrichtung 22 besteht aus einem U-förmigen liegenden Profil mit einer in Figur 3 gebrochen dargestellten Rückwand 23 und einem oberen und einem unteren Schenkel 24 und 25, die zwischen sich eine schlitzförmige Aufnahme 26 ausbilden. In diese Aufnahme 26 wird in Gebrauchslage eine Klemmleiste 15.1/15.2 des Tragrahmens 5 eingesetzt und über Klemmschrauben 27.1 und 27.2 gegen den unteren Schenkel 25 gedrückt. Hierdurch wird der Halter 1 an dem Multifix 21 festgelegt.

Die Festlegung der Klemmeinrichtung 22 geschieht über eine Manschette 28, welche einen Wellenkranz 29 teilweise umfängt und mit der Klemmeinrichtung 22 lösbar verbunden ist. Hierzu weist die Manschette 28 an ihren freien Enden verdickte Randkeder 30.1 und 30.2 auf, die in entsprechenden, vertikal verlaufenden hinterschnittenen Nuten 31.1 und 31.2 geführt sind.

Die Rückwand 23 der Klemmeinrichtung 22 ist im Bereich zwischen den beiden Nuten 31.1 und 31.2 ebenfalls wellenförmig ausgestaltet, wobei diese Wellen dem Wellenkranz 29 angepasst sind. In Gebrauchslage liegt die Klemmeinrichtung 22 mit einer Zunge 32 auf dem Wellenkranz 29 auf, so dass sie an einem Durchfallen nach unten gehindert ist.

Der Multifix 21 sitzt einem Kreuzschlitten 33 auf einem Maschinenbett 34 auf, so dass er in X- und Y-Richtung verfahrbar ist. Nicht gezeigt ist ferner eine Hubeinrichtung, mit der der Multifix auch in Z-Richtung anhebbar ist.

### Die Funktionsweise der vorliegenden Erfindung ist folgende:

Zum Bearbeiten des Werkstücks 3 wird die Bohrmaschine 18 in dem Schlitten 4 durch die Klemmeinrichtung 22 eingespannt, so dass der Bohrkopf 19 nach vorne herausschaut und in dem Bohrkopf 19 das Werkzeug 2 eingesetzt werden kann.

In dieser Gebrauchslage ist der Schlitten 4 mit dem Tragrahmen 5 bereits verbunden und wird zusammen mit dem Tragrahmen 5 durch ein Einsetzen einer Klemmleiste 15.1 bzw. 15.2 in die Aufnahme 26 der Klemmeinrichtung 22 eingesetzt. Durch die Klemmschrauben 27.1 und 27.2 wird die Klemmleiste 15.1 und 15.2 und damit auch die gesamte Kombination aus Tragrahmen 5 und Schlitten 4 mit der Klemmeinrichtung 22 verbunden.

Nunmehr wird die Manschette 28 durch Drehen um den Wellenkranz 29 herum in eine gewünschte Position gebracht, so dass auch das Werkzeug 2 gegenüber dem Werkstück 3 eine gewünschte Position einnimmt. Diese kann gerade oder in einem beliebigen Winkel schräg sein.

Danach wird die Klemmeinrichtung 22 mit der Manschette 28 verbunden, indem die Klemmeinrichtung 22 von oben im Bereich der Nuten 31.1 und 31.2 auf die Randkeder 30.1 und 30.2 aufgesetzt wird und entlang diesen Randkedern 30.1 und 30.2 nach unten gleitet. Dazu muss natürlich auch der wellenförmige Bereich der Rückwand 23 der Klemmeinrichtung 22 mit dem Wellenkranz 29 kongruieren. Eine weitergehende Bewegung wird durch den Anschlag der Zunge 32 auf dem Wellenkranz 29 verhindert.

Nunmehr wird das Werkzeug 2 durch Bewegen des Multifix 21 über den Kreuzschlitten 33 bzw. die entsprechende Hubeinrichtung gegen das Werkstück 3 gefahren. Sobald das Werkzeug 2 nahe genug an dem Werkstück 3 und richtig positioniert ist, wird der Antrieb 12 und die Bohrmaschine 18 in Betrieb gesetzt, so dass die entsprechende Arbeit an dem Werkstück 3 durchgeführt werden kann.

Wird nun eine andere Position gewünscht, wird der Multifix 21 wieder etwas zurückgefahren, die Klemmeinrichtung 22 nach oben von dem Multifix 21 abgezogen, die Manschette 28 um den Wellenkranz 29 in eine andere Position gedreht und die Klemmeinrichtung 22 wieder mit der Manschette 28 verbunden. Hierdurch ist eine andere Ausrichtung des Werkzeugs hergestellt.

Es versteht sich von selbst, dass auch eine derartige Verbindung zwischen Halter 1 und Klemmeinrichtung 22 vorgesehen sein kann, dass der Halter 1 gegenüber der Klemmeinrichtung 22 geneigt werden kann. Hierzu ist bspw. denkbar, dass die Klemmeinrichtung 22 in ihrer Längsachse geteilt und drehbar ausgeführt ist. Dabei sind viele Möglichkeiten denkbar, die von der vorliegenden Erfindung umfasst sein sollen.

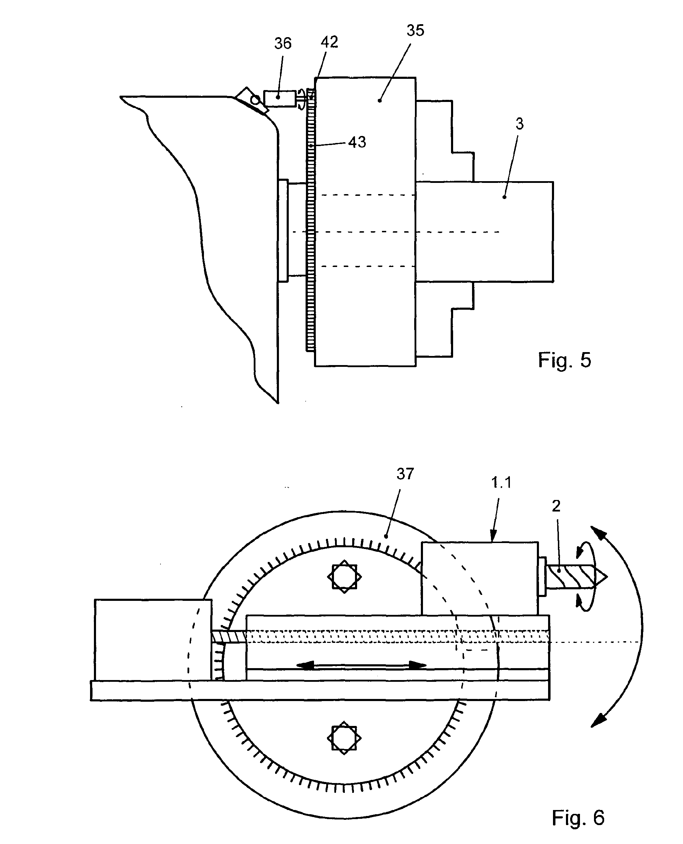

Gemäss Figur 5 besitzt ein Spannfutter 35 zur Aufnahme des Werkstückes 3 einen Antrieb 36. Dieser Antrieb 36 ist vorzugsweise als einschwenkbarer Motor ausgeführt, auf dessen Welle ein Zahnrad 42 aufsitzt. Diese kämmt einen Zahnkranz 43, der nicht mit dem Spannfutter 35 verbunden ist. Hierdurch wird das Werkstück 3 motorisch eingeklemmt bzw. freigegeben.

In den Figuren 6 bis 10 soll die oben nur angedeutete allseitige Bewegbarkeit des Werkzeuges 2 gegenüber dem Werkstück 3 gezeigt werden.

Entsprechend der Seitenansicht des in Figur 6 gezeigten Ausführungsbeispiels ist ein Halter 1.1 an einem Drehelement 37 angeordnet, welches sich z.B. in oder an der Klemmeinrichtung 22 befindet. Dadurch kann das Werkzeug 2 in jede beliebige Lage nach unten oder oben geschwenkt werden.

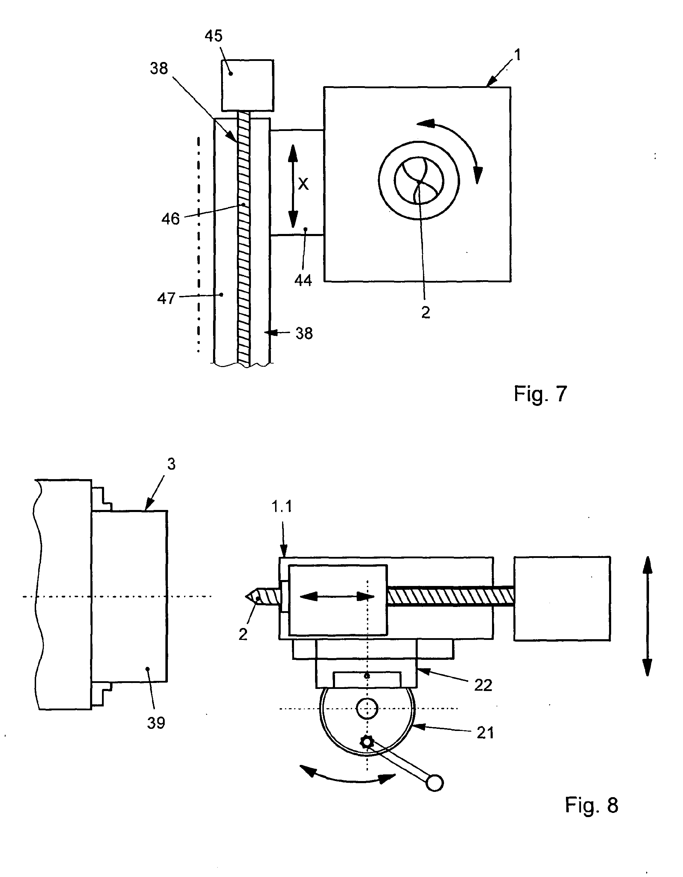

Entsprechend der in Figur 7 gezeigten Frontansicht ist der Halter 1 und damit auch das Werkstück 2 durch die Anbringung an einer Einrichtung 38 zur Höhenverstellung vertikal verstellbar. Hierbei sitzt der Halter 1 an einem Vertikalschlitten 44, der über einen Spindelantrieb 45/46 an einer Vertikalschiene 47 verfahrbar angeordnet ist. Damit kann die Werkzeugspitze 2 in der Höhe X verstellt werden.

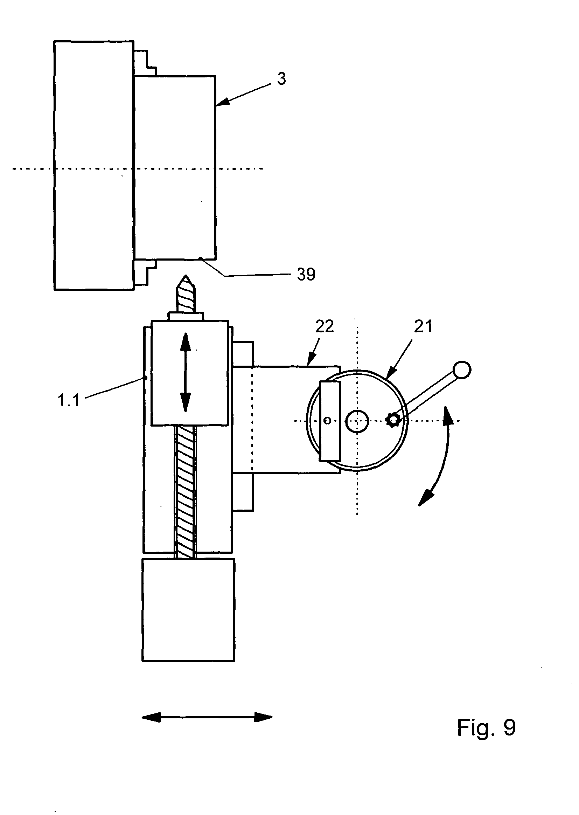

Wie in Figur 8 und 9 gezeigt, kann in einem weiteren bevorzugten Ausführungsbeispiel der Halter 1.1 das Werkzeug auch in eine Lage senkrecht zum Umfang des Werkstücks 3 bringen. Hierzu kann einmal der Multifix 21 soweit neben das Werkstück 3 verfahrbar sein, dass das Werkzeug 2 die Umfangfläche bearbeitet oder, wo dies nicht möglich ist, kann der Halter 1.1. entsprechend Figur 9 an der Klemmvorrichtung 2.2 umgesetzt werden.

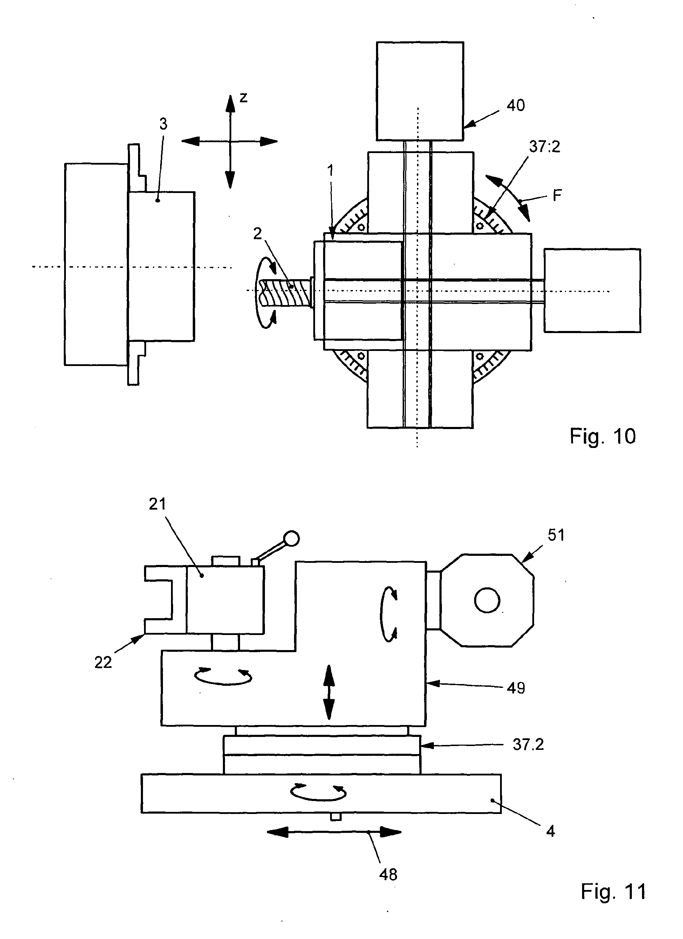

Ein weiteres bevorzugtes Ausführungsbeispiel wird in Figur 10 gezeigt. Durch die Anordnung des Halters 1 auf einem Drehelement 37.2 kann das Werkzeug 2 auch senkrecht zu der in Figur 6 gezeigten Ebene geschwenkt werden. Zusätzlich lässt sich über das Drehelement 37.2 der Winkel einstellen. Durch diese erfindungsgemässe Anordnung ist es möglich auf konventionellen Drehmaschinen Radien mit dem Werkzeug 2 in das Werkstück 3 zu fräsen.

In Figur 11 ist der Schlitten 4 nur schematisch dargestellt. Ihm kann der oben erwähnte Kreuzschlitten 33 zusätzlich zugeordnet sein, so dass der Schlitten in jede X- und Y-Richtung bewegbar ist. Ferner gestattet er einen Vorschub des Drehelements 37.2 in Richtung des Doppelpfeils 48.

Auf dem Drehelement 37.2 ist ein Tragkörper 49 angedeutet, der ggf. in Richtung eines Doppelpfeils 50 angehoben bzw. gesenkt werden kann. An diesem Tragkörper 49 befindet sich einmal der oben beschriebene Multifix 21 mit der Klemmeinrichtung 20, beispielsweise zur Aufnahme eines Tragrahmens 5 mit Schlitten 4 und Bohrmaschine 18. Des weiteren befindet sich erfindungsgemäss an dem Tragkörper 49 eine Fräseinrichtung 51, die nur schematisch dargestellt ist. Die Fräseinrichtung 51 ist ebenfalls höhenverstellbar und drehbar an den Tragkörper 49 angeordnet.

Mit dieser erfindungsgemässen Bohr- und Fräseinrichtung können somit beliebige Bohr- und/oder Frästätigkeiten in einer handelsüblichen Werkzeugmaschine durchgeführt werden, wobei das Werkstück von jeder Seite in jedem beliebigen Winkel bearbeitet werden kann.

Nebenbei sei bemerkt, dass für den Zusammenbau der einzelnen Bauelemente für diese Bearbeitungseinheit alle Schnellspannverfahren vorgesehen sein können.

**Bezugszeichenliste**

| | | | | | |
|---|---|---|---|---|---|
| 1 | Halter | 34 | Maschinenbett | 67 | |
| 2 | Werkzeug | 35 | Spannfutter | 68 | |
| 3 | Werkstück | 36 | Motor | 69 | |
| 4 | Schlitten | 37 | Drehelement | 70 | |
| 5 | Tragrahmen | 38 | Einrichtung zur Höhenverstellung | 71 | |
| 6 | Halterungen | 39 | Umfangsfläche | 72 | |
| 7 | Schlitz | 40 | | 73 | |
| 8 | Schiene | 41 | | 74 | |
| 9 | Spindelhülse | 42 | Zahnrad | 75 | |
| 10 | Spindel | 43 | Zahnkranz | 76 | |
| 11 | Rahmenabschnitt | 44 | Vertikalschlitten | 77 | |
| 12 | Antrieb | 45 | Motor | 78 | |
| 13 | Schlitz | 46 | Spindel | 79 | |
| 14 | Boden | 47 | Vertikalschiene | | |
| 15 | Klemmleiste | 48 | Doppelpfeil | | |
| 16 | Rahmengestell | 49 | Tragkörper | | |
| 17 | Doppelpfeil | 50 | Doppelpfeil | | |
| 18 | Bohrmaschine | 51 | Fräseinrichtung | | |
| 19 | Bohrkopf | 52 | | | |
| 20 | Klemmeinrichtung | 53 | | | |
| 21 | Multifix | 54 | | | |
| 22 | Klemmeinrichtung | 55 | | Z | Z-Richtung |
| 23 | Rückwand | 56 | | Y | Y-Richtung |
| 24 | oberer Schenkel | 57 | | X | X-Richtung |
| 25 | unterer Schenkel | 58 | | F | Schwenkrichtung |
| 26 | Aufnahme | 59 | | P | Vorrichtung |
| 27 | Klemmschraube | 60 | | | |
| 28 | Manschette | 61 | | | |
| 29 | Wellenkranz | 62 | | | |
| 30 | Randkeder | 63 | | | |
| 31 | Nut | 64 | | | |
| 32 | Zunge | 65 | | | |
| 33 | Kreuzschlitten | 66 | | | |

## Patentansprüche

1. Vorrichtung zum Bearbeiten eines Werkstücks (3) mit einem Werkzeug (2), welches in einem Halter (1, 1.1) aufgenommen und gegen das Werkstück (3) bewegbar ist,
**dadurch gekennzeichnet,**
**dass** der Halter (1, 1.1) mit dem Werkzeug (2) in jedem Winkel gegenüber dem Werkstück (3) einstellbar ist.

2. Vorrichtung nach Anspruch 1, **dadurch gekennzeichnet, dass** der Halter (1, 1.1) einem Multifix (21) zugeordnet ist.

3. Vorrichtung nach Anspruch 2, **dadurch gekennzeichnet, dass** der Halter (1, 1.1) lösbar mit dem Multifix (21) verbunden ist.

4. Vorrichtung nach Anspruch 2 oder 3, **dadurch gekennzeichnet, dass** dem Multifix (21) eine Klemmeinrichtung (22) zugeordnet ist.

5. Vorrichtung nach Anspruch 4, **dadurch gekennzeichnet, dass** die Klemmeinrichtung (22) eine Aufnahme (26) für eine Klemmleiste (15.1, 15.2) aufweist, wobei die Klemmleiste (15.1, 15.2) dem Halter (1) zugeordnet ist.

6. Vorrichtung nach wenigstens einem der Ansprüche 1 bis 5, **dadurch gekennzeichnet, dass** der Halter (1) aus einem Tragrahmen (5) und einem Schlitten (4) besteht.

7. Vorrichtung nach Anspruch 6, **dadurch gekennzeichnet, dass** die zumindest eine Klemmleiste (15.1, 15.2) an dem Tragrahmen (5) vorgesehen ist.

8. Vorrichtung nach Anspruch 6 oder 7, **dadurch gekennzeichnet, dass** am Tragrahmen (5) zumindest eine Halterung (6.1, 6.2) für den Schlitten (4) vorgesehen ist.

9. Vorrichtung nach Anspruch 8, **dadurch gekennzeichnet, dass** der Schlitten (4) lösbar mit der Halterung (6.1, 6.2) verbunden ist.

10. Vorrichtung nach Anspruch 8 oder 9, **dadurch gekennzeichnet, dass** die zumindest eine Halterung (6.1, 6.2) an einer Spindel (10) angeordnet und diese drehbar an dem Tragrahmen (5) gelagert ist.

11. Vorrichtung nach Anspruch 10, **dadurch gekennzeichnet, dass** der Spindel (10) ein Antrieb (12) zugeordnet ist.

12. Vorrichtung nach wenigstens einem der Ansprüche 6 bis 11, **dadurch gekennzeichnet, dass** der Schlitten (4) ein Rahmengestell (16) aufweist.

13. Vorrichtung nach Anspruch 12, **dadurch gekennzeichnet, dass** dem Rahmengestell (16) eine Schiene (8) zum Einsetzen in die Halterung (6.1, 6.2) zugeordnet ist.

14. Vorrichtung nach wenigstens einem der Ansprüche 6 bis 13, **dadurch gekennzeichnet, dass** am Schlitten (4) eine weitere Klemmeinrichtung (20) für einen Antrieb (18) für das Werkzeug (2) vorgesehen ist.

15. Vorrichtung nach Anspruch 14, **dadurch gekennzeichnet, dass** der Antrieb für das Werkzeug (2) eine Bohrmaschine (18) ist.

16. Vorrichtung nach wenigstens einem der Ansprüche 2 bis 15, **dadurch gekennzeichnet, dass** der Multifix (21) in X-, Y- und Z-Richtung verfahrbar ist.

17. Vorrichtung nach wenigstens einem der Ansprüche 1 - 16, **dadurch gekennzeichnet, dass** der Halter (1) an einer Einrichtung (38) zur Höhenverstellung angeordnet ist.

18. Vorrichtung nach wenigstens eine der Ansprüche 1 - 17, **dadurch gekennzeichnet, dass** der Halter (1.1) an einem senkrecht stehenden Drehelement (37) angeordnet ist.

19. Vorrichtung nach wenigstens einem der Ansprüche 1 - 18, **dadurch gekennzeichnet, dass** der Halter (1.1) auf einem liegenden Drehelement (37.2) aufsitzt.

20. Vorrichtung nach wenigstens einem der Ansprüche 1 bis 19, **dadurch gekennzeichnet, dass** zumindest zwei gleiche oder unterschiedliche Werkzeuge (3, 51) vorgesehen sind.

21. Vorrichtung nach Anspruch 20, **dadurch gekennzeichnet, dass** die Werkzeuge (3, 51) an einem Tragkörper (49) angeordnet sind.

22. Vorrichtung nach Anspruch 21, **dadurch gekennzeichnet, dass** der Tragkörper einem Drehelement (37.2) aufsitzt.

23. Vorrichtung nach Anspruch 21, **dadurch gekennzeichnet, dass** das Drehelement (37.2) einem Schlitten (4) aufsitzt.

24. Halter für ein Werkzeug (2) zum Bearbeiten eines Werkstücks (3) in einer Werkzeugmaschine, insbesondere in einer Drehbank, **dadurch gekennzeichnet, dass** das Werkzeug (2) einem Schlitten (4) zugeordnet ist.

25. Halter nach Anspruch 24, **dadurch gekennzeichnet, dass** der Schlitten (4) bewegbar auf einem Tragrahmen (5) sitzt.

26. Halter nach Anspruch 25, **dadurch gekennzeichnet, dass** der Tragrahmen (5) zumindest eine Halterung (6.1, 6.2) für den Schlitten (4) aufweist.

27. Halter nach Anspruch 26, **dadurch gekennzeichnet, dass** dem Schlitten (4) eine Schiene (8) zum lösbaren Einsetzen in die Halterung (6.1, 6.2) zugeordnet ist.

28. Halter nach Anspruch 26 oder 27, **dadurch gekennzeichnet, dass** die Halterung (6.1, 6.2) an einer Spindel (10) angeordnet und diese drehbar an dem Tragrahmen (5) gelagert ist.

29. Halter nach wenigstens einem der Ansprüche 24 bis 28, **dadurch gekennzeichnet, dass** dem Tragrahmen (5) zumindest eine Klemmleiste (15.1, 15.2) zum Festlegen an einer Klemmeinrichtung (22) zugeordnet ist.

30. Halter nach Anspruch 29, **dadurch gekennzeichnet, dass** die Klemmeinrichtung (22) lösbar einem Multifix (21) in der Werkzeugmaschine zugeordnet ist.

31. Vorrichtung zum Bearbeiten eines Werkstücks (3) mit einem Werkzeug (2) welches in einem Halter (1, 1.1) aufgenommen und gegen das Werkstück (3) bewegbar ist, wobei das Werkstück (3) von einem Spannfutter (35) gehalten ist, **dadurch gekennzeichnet, das** das Spannfutter (35) motorisch betätigbar ist.

32. Vorrichtung nach Anspruch 31, **dadurch gekennzeichnet, dass** dem Spannfutter (35) ein Zahnkranz (43) zugeordnet ist, der mit einem Zahnrad (42) eines Motors (36) zusammen wirkt.

33. Vorrichtung nach Anspruch 32, **dadurch gekennzeichnet, dass** das Zahnrad (42) von dem Zahnkranz (43) wegbewegbar angeordnet ist.
